# EUROPEAN PATENT APPLICATION

(11) **EP 1 801 161 A1**
(43) Date of publication of application: **27.06.2007**
(21) Application number: 05790533.3
(22) Date of filing: 05.10.2005
(51) Int. Cl.: C08L 75/04, B32B 9/00, B32B 27/40, C08K 5/21, C08L 63/00, C08L 101/02

(54) **GAS BARRIER RESIN COMPOSITION AND GAS BARRIER FILM**

(30) Priority: 12.10.2004 JP 2004297302
(71) Applicant: TORAY INDUSTRIES, INC., Tokyo 103-8666 (JP)
(72) Inventor: ARAI, Takashi, Shiga 5200842 (JP); TATEISHI, Yasushi, Mishima-shi, Shizuoka 411-0033 (JP); HIROTA, Kusato, Shiga 5200822 (JP)
(74) Representative: Webster, Jeremy Mark
(86) International application number: PCT/JP2005/018408
(87) International publication number: WO 2006/040965

(57) **Abstract**

Disclosed herein are a gas barrier resin composition which is free from halogen and which has excellent gas barrier properties, and a gas barrier film. The gas barrier resin composition includes: a polymer (A) whose repeating unit contains a functional group with active hydrogen and/or a polar functional group with hetero atom; and an organic compound (B) containing, in its molecule, a functional group with active hydrogen and/or a polar functional group with hetero atom. The gas barrier film includes the gas barrier resin composition.

## Description

### FIELD OF THE INVENTION

The present invention relates to a gas barrier resin composition which is useful as a film, sheet, or molding material having excellent oxygen and water vapor barrier properties and which has excellent base film coating properties, and to a gas barrier film using such a gas barrier resin composition.

### BACKGROUND ART

Gas barrier films and materials for packaging using the same are already well known. Among them, aluminum foil is known to have the most excellent oxygen gas barrier properties, but cannot be used by itself due to its weak pinhole resistance, except for special purposes. Therefore, in most cases, aluminum foil is used as an intermediate layer of a laminated film. Such a laminated film has excellent gas barrier properties, but is opaque and therefore there is a drawback that an object wrapped in the laminated film cannot be seen through the laminated film. In addition, there is also a drawback that it is difficult to check whether the laminated film has been properly heat-sealed or not.

Thermoplastic films such as polyester films and polyamide films are also used as materials for packaging for a wide range of purposes due to their high strength, transparency and formability. However, these thermoplastic films have high permeability to gases such as oxygen and water vapor, and therefore there is a case where when such thermoplastic films are used for packaging of common foods or retort-processed foods, the quality of these foods is changed or deteriorated during long storage.

Therefore, in most cases, as materials for packaging required to have gas barrier properties, such as materials for packaging food, films obtained by coating base films such as polyolefin films, nylon films, and polyethylene terephthalate (hereinafter, abbreviated as "PET") films with an emulsion of vinylidene chloride (hereinafter, abbreviated as "PVDC") are conventionally used. Such PVDC-coated films exhibit high oxygen barrier properties not only under low-humidity conditions but also under high-humidity conditions, and also exhibit high water vapor barrier properties. However, when PVDC-coated films are incinerated in the process of waste disposal, chlorine gas resulting from chlorine contained in PVDC is generated. In addition, there is also a fear of generation of dioxin. For this reason, transition from PVDC-coated films to other materials is strongly desired.

Polyvinyl alcohol (hereinafter, abbreviated as "PVA") films and PVA-coated films are the most well-known gas barrier materials free from chlorine. PVA exhibits excellent oxygen gas barrier properties in a dry environment. However, the gas barrier properties of PVA have great dependence on humidity, and are therefore significantly impaired under high-humidity conditions. In addition, there is also a problem that PVA does not have water vapor barrier properties and is easily dissolved in hot water.

In order to improve gas barrier properties of PVA under high-humidity conditions, there are proposed a polymer obtained by mixing PVA and partially neutralized polyacrylic acid or polymethacrylic acid (see, for example Patent Document 1), a polymer obtained by mixing PVA, an ethylene-maleic acid copolymer, and a cross-linking agent (see, for example Patent Document 2), and a polymer obtained by mixing PVA, polyitaconic acid, and a metal compound (see Patent Document 3). All these methods are intended to improve gas barrier properties of a polymer film under high-humidity conditions by forming a cross-linked structure via ester bonds. However, in order to improve gas barrier properties of a polymer film by using such a method, it is necessary to subject the mixture to reaction by heating it at a high temperature for a long time to sufficiently proceed esterification, which causes a problem such as reduction of not only productivity but also aptitude for after process due to heat shrinkage of a base film, or deterioration of appearance due to color development.
Patent Document 1: Japanese Patent Application Laid-open No. H10-237180 (Paragraphs 0060 to 0065)
Patent Document 2: Japanese Patent Laid-open No. 2001-323204 (Paragraphs 0047 to 0058)
Patent Document 3: Japanese Patent Laid-open No. 2004-35833 (Paragraphs 0061 to 0066)

### DISCLOSURE OF THE INVENTION

### Problem to be Solved by the Invention

In view of such background of the prior art, it is an object of the present invention to provide a gas barrier resin composition which is free from halogen and which has excellent gas barrier properties, and a gas barrier film using such a gas barrier resin composition.

### Means for Solving the Problem

In order to achieve the above object, the present invention is directed to a gas barrier resin composition including: a polymer (A) whose repeating unit contains a functional group with active hydrogen and/or a polar functional group with hetero atom; and an organic compound (B) containing, in its molecule, a functional group with active hydrogen and/or a polar functional group with hetero atom.

The present invention is also directed to a gas barrier film including such a gas barrier resin composition.

### Effect of the Invention

According to the present invention, it is possible to provide a resin composition which has oxygen barrier properties with little dependence on humidity and high water vapor barrier properties, and which does not contain halogen such as chlorine. In addition, the gas barrier resin composition according to the present invention does not need to be subjected to heat treatment at a high temperature when formed into a gas barrier layer. Accordingly, the gas barrier resin composition according to the present invention is useful as a film, sheet, or molding material, and has excellent base film coating properties. Further, the use of such a gas barrier resin composition makes it possible to provide a gas barrier film which is free from halogen, and which has excellent gas barrier properties.

### BEST MODE FOR CARRYING OUT THE INVENTION

Intensive studies have been made to achieve the above object, and as a result, it has been found that a resin composition including a specific polymer and a specific compound is free from halogen and exhibits high gas barrier properties and excellent film forming properties.

More specifically, the gas barrier resin composition according to the present invention includes: a polymer (A) whose repeating unit contains a functional group with active hydrogen and/or a polar functional group with hetero atom; and an organic compound (B) containing, in its molecule, a functional group with active hydrogen and/or a polar functional group with hetero atom, and has higher gas barrier properties than ever before.

In the present invention, the functional group with active hydrogen is at least one kind selected from a hydroxyl group, an amino group, a carboxyl group, and an amide group, and the polar functional group with hetero atom is at least one kind selected from a carbonyl group, a cyano group, an amide group, and a thiocarbonyl group. Between active hydrogen and the polar functional group with hetero atom, intermolecular interaction occurs. Examples of such intermolecular interaction include hydrogen bonding, electrostatic interaction, hydrophobic interaction, and Van der Waals force.

As a factor in determining gas barrier properties of a thin film layer formed from a resin composition, free volume can be mentioned. As described above, since the polymer (A) contains, in its polymer structure, a functional group allowing intermolecular interaction such as hydrogen bonding or electrostatic interaction to occur, molecules of the polymer (A) tend to strongly cohere with one another by using intermolecular interaction as driving force. As a result, energy density of cohesion and orientation of the polymer (A) are increased, thereby reducing free volume. Free volume serves as a path of gas molecules such as oxygen and water vapor, and therefore a reduction in free volume improves gas barrier properties. It can be considered that driving force for reducing free volume is increased as the density of intermolecular interaction occurring between molecules of the polymer (A) increases, thereby increasing the energy density of cohesion of the polymer (A).

The organic compound (B) fills remaining free volume which cannot be reduced by only cohesion between molecules of the polymer (A). More specifically, the organic compound (B) is inserted between polymer chains of the polymer (A) to fill free space between the polymer chains by using intermolecular interaction occurring between the organic compound (B) and the polymer (A) as driving force.

As described above, the present invention is characterized by improving gas barrier properties by causing intermolecular interaction between molecules of the polymer (A) and between the polymer (A) and the organic compound (B). In addition to improved gas barrier properties, since the organic compound (B) is bonded to the polymer (A) not via covalent bonding but via intermolecular interaction, the resin composition according to the present invention can be formed without using high energy, thereby significantly improving productivity. The above-mentioned conventional method using a cross-linking agent involves heating at a high temperature for a long time to form covalent bonding between polyvinyl alcohol or the like and a cross-linking agent, whereas the present invention does not involve heating at a high temperature for a long time because the polymer (A) and the organic compound (B) are noncovalently bonded via intermolecular interaction, thereby significantly improving productivity.

Hereinbelow, the present invention will be described in detail.

The repeating unit of the polymer (A) used in the present invention may be any one of an aliphatic compound, an alicyclic compound, and an araliphatic compound, as long as it contains a functional group with active hydrogen and/or a polar functional group with hetero atom.

Examples of the polymer (A) containing a functional group with active hydrogen and/or a polar functional group with hetero atom include a polymer containing one selected from the group consisting of a urethane segment and a urea segment, and a polyalcohol containing two or more hydroxyl groups.

The urethane segment or urea segment may be contained in either a main chain or a side chain of the polymer (A). The urethane segment and the urea segment are preferred because they contain, in their structure, both an amino group having active hydrogen and a carbonyl group which can interact with active hydrogen, which makes it possible to form a plurality of hydrogen bonds between molecules of the polymer (A) and between the polymer (A) and the organic compound (B).

The urethane segment or urea segment is preferably contained in a main chain of the polymer (A). This is because the polymer (A) containing the urethane segment or urea segment in a main chain thereof is less sterically-bulky than the polymer (A) containing the urethane segment or urea segment in a side chain thereof, and therefore there is an advantage that when molecules of the polymer (A) strongly cohere with one another by using intermolecular interaction as driving force, free volume can be made smaller. Among various polymers, polyurethane is preferably used because polyurethane contains, in its repeating structures, a plurality of amino groups which can form hydrogen bonding with a polar functional group with hetero atom and a plurality of carbonyl group which can form hydrogen bonding with a polar functional group with active hydrogen, thereby significantly improving gas barrier properties.

Such a polyurethane resin is not particularly limited. For example, a polyurethane resin obtained by urethanizing reaction of a diisocyanate component and a diol component can be used. The thus obtained polyurethane resin may be further subjected to chain-extending reaction or cross-linking reaction with an amine component before use.

Examples of the diisocyanate component include an aromatic diisocyanate, an araliphatic diisocyanate, an alicyclic diisocyanate, and an aliphatic diisocyanate.

Examples of the aromatic diisocyanate include m- or p-phenylene diisocyanate, 4,4'-diphenyl diisocyanate, 1,5-naphthalene diisocyanate (NDI), 4,4'-, 2,4'-, or 2,2'-diphenylmethane diisocyanate (MDI), 2,4- or 2, 6-tolylene diisocyanate (TDI), and 4,4'-diphenyl ether diisocyanate.

Examples of the araliphatic diisocyanate include 1, 3- or 1,4-xylylene diisocyanate (XDI) and 1,3- or 1,4-tetramethylxylylene diisocyanate (TMXDI).

Examples of the alicyclic diisocyanate include 1,4-cyclohexane diisocyanate, 1,3-cyclohexane diisocyanate, 3-isocyanatemethyl-3,5,5-trimethylcyclohexylisocyanate (isophorone diisocyanate; IPDI), 4,4'-, 2,4'-, or 2,2'-dicyclohexylmethane diisocyanate (hydrogenated MDI), methyl-2,4-cyclohexane diisocyanate, methyl-2,6-cyclohexane diisocyanate, and 1,3- or 1,4-bis(isocyanatemethyl)cyclohexane (hydrogenated XDI).

Examples of the aliphatic diisocyanate include trimethylene diisocyanate, tetramethylene diisocyanate, hexamethylene diisocyanate (HDI), pentamethylene diisocyanate, 1,2-propylene diisocyanate, 1,2-, 2,3-, or 1,3-butylene diisocyanate, and 2,4,4- or 2,2,4-trimethylhexamethylene diisocyanate.

From the viewpoint of reducing free volume between polymer chains and reducing steric hindrance upon occurrence of intermolecular interaction, when the diisocyanate component has a substituent in its ring, the substituent preferably has a short chain (e.g., C₁₋₃ alkyl groups).

Further, the diisocyanate component preferably has a symmetric structure. For example, the aromatic diisocyanate is preferably TDI, MDI, or NDI, the araliphatic diisocyanate is preferably XDI or TMXDI, the alicyclic diisocyanate is preferably IPDI, hydrogenated XDI, or hydrogenated MDI, and the aliphatic diisocyanate is preferably HDI.

These diisocyanate components can be used singly or in combination of two or more of them. If necessary, the diisocyanate component may be used together with a polyisocyanate having three or more functional groups.

Examples of the diol component include a wide range of diols from low-molecular weight diols to oligomers, such as C₂₋₁₂ alkylene glycols (e.g., ethylene glycol, 1,3- or 1, 2-propylene glycol, 1,4-, 1,3-, or 1,2-butanediol, 1,5-pentanediol, 3-methyl-1,5-pentanediol, 2,4-diethyl-1,5-pentanediol, 2,2,4-trimethylpentane-1,3-diol, 1,6-hexanediol, neopentyl glycol, 1,5- or 1,7-heptanediol, 1,8-octanediol, 1,9-nonanediol, 1,10-decanediol, 1,11-undecanediol, 1,12-dodecanediol); polyether diols such as polyoxy C₂₋₄ alkylene glycols (e.g., diethylene glycol, triethylene glycol, tetraethylene glycol, pentaethylene glycol, hexaethylene glycol, heptaethylene glycol, dipropylene glycol, tripropylene glycol, tetrapropylene glycol, pentapropylene glycol, hexapropylene glycol, heptapropylene glycol, dibutylene glycol, tributylene glycol, tetrabutylene glycol); aromatic diols (e.g., bisphenol A, bishydroxyethyl terephthalate, catechol, resorcin, hydroquinone, 1,3- or 1,4-xylylenediol or a mixture of them); and alicyclic diols (e.g., hydrogenated bisphenol A, hydrogenated xylylenediol, cyclohexanediol, cyclohexanedimethanol).

Among these diol components, from the viewpoint of gas barrier properties, C₂₋₈ diols such as ethylene glycol, propylene glycol, butanediol, pentanediol, hexanediol, heptanediol, octanediol, diethylene glycol, triethylene glycol, tetraethylene glycol, and dipropylene glycol are preferably used, and C₂₋₆ diols (especially, ethylene glycol, 1,2- or 1,3-propylene glycol, 1,4-butanediol, 1,6-hexanediol, 3-methyl-1,5-pentanediol, diethylene glycol, triethylene glycol, dipropylene glycol) are more preferably used.

These diol components can be used singly or in combination of two or more of them. If necessary, the diol component may be used together with a polyol component having three or more functional groups.

If necessary, a diamine component may be used as a chain-extending agent or a cross-linking agent. Examples of such a diamine component include hydrazine, aliphatic diamines (e.g., ethylenediamine, trimethylenediamine, tetramethylenediamine, pentamethylenediamine, hexamethylenediamine, 2,2,4-trimethylhexamethylenediamine, 2,4,4-trimethylhexamethylenediamine, octamethylenediamine); aromatic amines (e.g. m- or p-phenylenediamine, 1,3- or 1,4-xylylenediamine or a mixture of them); and alicyclic diamines (e.g., hydrogenated xylylenediamine, bis(4-aminocyclohexyl)methane, isophoronediamine, bis(4-amino-3-methylcyclohexyl)methane). In addition to these diamine components, diamines having a hydroxyl group, such as 2-hydrazinoethanol and 2-[(2-aminoethyl)amino]ethanol, can also be mentioned. Among these diamine components, from the viewpoint of gas barrier properties, low-molecular weight diamine components having 8 or less carbon atoms are preferably used, and diamine components having 6 or less carbon atoms (especially, hydrazine, ethylenediamine, tetramethylenediamine, pentamethylenediamine, hexamethylenediamine, 2-hydrazinoethanol, 2-[(2-aminoethyl)amino]ethanol) are more preferably used. These diamine components can be used singly or in combination of two or more of them. If necessary, the diamine component may be used together with a polyamine component having three or more functional groups.

Further, a polyalcohol is preferably used because it has a plurality of hydroxyl groups, which makes it possible to form a plurality of hydrogen bonds between molecules of the polymer (A) and between the polymer (A) and the organic compound (B). Examples of such a polyalcohol include a modified or unmodified polyvinyl alcohol, vinyl alcohol-based copolymers such as a saponified ethylene-vinyl acetate copolymer (hereinafter, abbreviated as "EVOH") that is a copolymer of vinyl alcohol and ethylene, phenol resins, epoxy resins, and polysaccharides.

It is preferred that the polyvinyl alcohol has an average degree of polymerization of preferably 200 to less than 3000, more preferably 200 to 3000, and has a degree of saponification of preferably 95 to 100%, particularly preferably 98 to 99.9%. The polyvinyl alcohol to be used may be unmodified or modified with various functional groups.

An example of such a modified polyvinyl alcohol includes a polyvinyl alcohol modified with an anionic, cationic, or nonionic functional group. An anionic, cationic, or nonionic functional group can be introduced into a polyvinyl alcohol by a well known method such as introduction of a monomer having such a functional group into a polyvinyl alcohol by graft copolymerization, random copolymerization, or block copolymerization, or treating the end of a polyvinyl alcohol.

Examples of the polysaccharides include cellulose, hydroxyethylcellulose, hydroxymethylcellulose, carboxymethylcellulose, amylose, amylopectin, starch, oxidized starch, pullulan, chitin, chitosan, and dextrin.

These polymers can be used singly or in combination of two or more of them.

The organic compound (B) may be any one of an aliphatic compound, an alicyclic compound, and an araliphatic compound, as long as it contains a functional group with active hydrogen and/or a polar functional group with hetero atom.

The organic compound (B) is preferably a compound containing at least one selected from the group consisting of a primary amino group, a secondary amino group, and a carbonyl group which can interact with a functional group with active hydrogen and/or a polar functional group with hetero atom contained in the polymer (A). From the viewpoint of improving gas barrier properties, urea-based compounds such as urea, dimethyl urea, and thiourea are particularly preferably used because urea-based compounds are not sterically-bulky and therefore can fill space between polymer chains without expanding the space. Among these urea-based compounds, urea is most preferably used.

The amount of the organic compound (B) contained in the gas barrier resin composition is preferably in the range of 2 to 40 parts by weight with respect to 100 parts by weight of the polymer (A). If the amount of the organic compound (B) contained in the gas barrier resin composition exceeds 40 parts by weight with respect to 100 parts by weight of the polymer (A), there is a case where the organic compound (B) bleeds out from a formed film, thereby causing blocking. The upper limit of the amount of the organic compound (B) contained in the gas barrier resin composition is more preferably 30 parts by weight with respect to 100 parts by weight of the polymer (A). The lower limit of the amount of the organic compound (B) contained in the gas barrier resin composition is more preferably 3 parts by weight, even more preferably 5 parts by weight, with respect to 100 parts by weight of the polymer (A). By setting the amount of the organic compound (B) contained in the gas barrier resin composition to a value within the above range with respect to 100 parts by weight of the polymer (A), both cohesion between molecules of the polymer (A) and interaction between the polymer (A) and the organic compound (B) efficiently occur so that free volume is reduced, thereby improving gas barrier properties. In addition, by setting the amount of the organic compound (B) contained in the gas barrier resin composition to a value within the above range with respect to 100 parts by weight of the polymer (A), the gas barrier resin composition can have excellent film forming properties and a film formed from such a gas barrier resin composition has high strength.

As described above, the thus obtained gas barrier resin composition according to the present invention itself has excellent film forming properties, and therefore can be formed into a film usable as it is. However, the gas barrier resin composition according to the present invention is preferably laminated onto a base film having high mechanical strength when used.

Examples of the base film include: polyolefin-based films such as low-density polyethylene, high-density polyethylene, linear low-density polyethylene, and polypropylene; polyester-based films such as polyethylene terephthalate and polybutylene terephthalate; polyamide-based films such as nylon 6, nylon 66, and m-xyleneadipamide; polyacrylonitrile-based films; poly(meth)acrylic films; polystyrene-based films; polycarbonate-based films; saponified ethylene-vinylacetate copolymer-based films; polyvinyl alcohol-based films; and laminates of two or more of these films. The base film may be a non-stretched, uniaxially-stretched, or biaxially-stretched film. If necessary, the base film may be subjected to surface treatment (e.g., electric discharge such as corona discharge or plasma discharge, acid treatment) or undercoating treatment.

From the viewpoint of practical use, the thickness of the base film is preferably in the range of about 1 to 100 µm, more preferably in the range of about 5 to 50 µm, particularly preferably in the range of about 10 to 30 µm.

It is also preferred that the gas barrier film according to the present invention is further provided with an inorganic layer laminated on the base film. For example, on at least one surface of the base film, an inorganic layer such as a metal layer, a metal oxide layer, or a metal nitride layer may be formed. Such an inorganic layer can be formed by vapor deposition or sputtering. Examples of a material for forming the inorganic layer include: metals such as aluminum, silver, tin, chromium, nickel, and titanium; metal oxides such as aluminum oxide, magnesium oxide, titanium oxide, tin oxide, indium oxide alloy, silicon oxide, and silicon nitride oxide; and metal nitrides such as aluminum nitride, titanium nitride, and silicon nitride.

By providing such an inorganic layer, it is possible to further improve gas barrier properties of the gas barrier film. Particularly, a metal oxide layer is preferred because gas barrier properties of the gas barrier film can be improved without loss of transparency of the gas barrier film.

The gas barrier resin composition according to the present invention may be added to a solvent to prepare a coating liquid. Examples of such a solvent include toluene, xylene, ethyl acetate, butyl acetate, acetone, methyl ethyl ketone, methyl isobutyl ketone, tetrahydrofuran, dimethylformamide, dimethylacetamide, methanol, ethanol, and water. The coating liquid may be either of an emulsion type or a solution type.

Examples of a method for preparing such a coating liquid include a method in which the organic compound (B) is directly added to a solution or emulsion of the polymer (A) and then they are stirred, and a method in which the organic compound (B) previously dissolved or dispersed in water or an organic solvent is added to a solution or emulsion of the polymer (A) and then they are stirred.

The gas barrier resin composition according to the present invention may contain additives such as thermostabilizers, antioxidants, reinforcements, pigments, antidegradation agents, weatherproofing agents, flame retardants, plasticizers, release agents, and lubricants, as long as the characteristics thereof are not impaired.

Examples of the thermostabilizers, antioxidants, and antidegradation agents include hindered phenols, phosphorous compounds, hindered amines, sulfur compounds, copper compounds, alkali metal halides, and mixtures thereof.

Examples of the reinforcements include clay, talc, calcium carbonate, zinc carbonate, wollastonite, silica, alumina, magnesium oxide, calcium silicate, sodium aluminate, sodium aluminosilicate, magnesium silicate, glass balloon, carbon black, zinc oxide, zeolite, hydrotalcite, metal fibers, metal whisker, ceramic whisker, potassium titanate whisker, boron nitride, graphite, glass fibers, and carbon fibers.

The gas barrier resin composition according to the present invention may contain an inorganic layered compound. Preferred examples of the inorganic layered compound include montmorillonite, beidellite, saponite, hectorite, sauconite, vermiculite, fluorine mica, white mica, palagonite, bronze mica, black mica, lepidolite, margarite, clintonite, and anandite. Among these inorganic layered compounds, swollen fluorine mica or montmorillonite is particularly preferred.

These inorganic layered compounds may be naturally occurring or artificially synthesized or modified. Such naturally occurring or artificially synthesized or modified inorganic layered compounds may further be treated with an onium salt or the like.

The thickness of a gas barrier resin film formed from the gas barrier resin composition is preferably in the range of 0.1 to 5 µm. The lower limit of the gas barrier resin film is more preferably 0.2 µm, even more preferably 0.3 µm. The upper limit of the thickness of the gas barrier resin film is more preferably 3 µm. If the thickness of the gas barrier resin film is less than 0.1 µm, it is not easy to obtain a uniform gas barrier resin film and it is difficult to significantly improve gas barrier properties. In addition, if the thickness of the gas barrier resin film is less than 0.1 µm, it is difficult to form such a gas barrier resin film by coating so as not to cause a defect such as film breakage or crawling. On the other hand, if the thickness of the gas barrier resin film exceeds 5 µm, there is a disadvantage that when such a gas barrier resin film is formed by coating, it is necessary to dry the gas barrier resin film at a higher temperature for a longer period of time to sufficiently evaporate a solvent.

A method for coating a base film with the gas barrier resin composition is not particularly limited, and can be appropriately selected according to the kind of base film to be used. Examples of such a coating method include roller coating, dip coating, bar coating, die coating, and combinations thereof.

The coating liquid applied onto a base film is preferably dried at a temperature of preferably 70°C or higher, more preferably 90°C or higher for preferably 1 second or longer, more preferably 3 seconds or longer, depending on the kind of solvent used for preparing the coating liquid. Insufficient drying may cause deterioration of gas barrier properties.

### Examples

Hereinbelow, the present invention will be described more specifically with reference to the following examples. It is to be noted that in the following examples, the term "part" means "part by weight" unless otherwise specified.

### (Methods for evaluating gas barrier properties of films)

The gas barrier properties of films of the following examples and comparative examples were evaluated by measuring oxygen permeability and water vapor permeability as follows.

### (1) Oxygen permeability

The oxygen permeability of each film was measured using an oxygen permeability measuring device (manufactured by MOCON Inc. (US) under the trade name of "OXTRAN 2/20") under conditions of 23°C and 0% RH.

### (2) Water vapor permeability

The water vapor permeability of each film was measured using a water vapor permeability measuring device (manufactured by MOCON Inc. (US) under the trade name of "PERMATRAN W3/31") under conditions of 40°C and 100% RH.

### (Example 1)

439.1 parts of 1,4-bis(isocyanatemethyl)cyclohexane, 35.4 parts of dimethylol propionic acid, 61.5 parts of ethylene glycol, and 140 parts of acetonitrile as a solvent were mixed, and the mixture was subjected to reaction at 70°C in an atmosphere of nitrogen for 3 hours. The thus obtained carboxylic acid group-containing polyurethane prepolymer solution was neutralized at 50°C with 24.0 parts of triethylamine. 267.9 parts of the polyurethane prepolymer solution was dispersed in 750 parts of water with a HOMO DISPER, and then 35.7 parts of 2- [(2-aminoethyl)amino] ethanol was added thereto to carry out a chain-extending reaction. Acetonitrile was removed by evaporation to obtain a polyurethane resin water dispersion 1 having a solid content of 25 wt%. To the thus obtained polyurethane resin water dispersion 1 (10 parts), 0.5 parts of urea was added, and they were stirred for 30 minutes to obtain a coating liquid. A 16 µm thick biaxially-stretched polyethylene terephthalate film whose one surface had been subjected to corona discharge treatment was prepared. The coating liquid was applied onto the corona discharge-treated surface of the polyethylene terephthalate film, and was then dried at 110°C for 60 seconds to obtain a resin layer-coated film having a thickness of 18 µm. The thickness of the gas barrier resin layer was 2 µm.

### (Example 2)

429.1 parts of 1,3-xylylene diisocyanate, 35.4 parts of dimethylol propionic acid, 61.5 parts of ethylene glycol, and 140 parts of acetonitrile as a solvent were mixed, and the mixture was subjected to reaction at 70°C in an atmosphere of nitrogen for 3 hours. The thus obtained carboxylic acid group-containing polyurethane prepolymer solution was neutralized at 50°C with 24 parts of triethylamine. 267.9 parts of the polyurethane prepolymer solution was dispersed in 750 parts of water with a HOMO DISPER, and then 35.7 parts of 2- [(2-aminoethyl) amino] ethanol was added thereto to carry out a chain-extending reaction. Acetonitrile was removed by evaporation to obtain a polyurethane resin water dispersion 2 having a solid content of 25 wt%. To the thus obtained polyurethane resin water dispersion 2 (10 parts), 0.5 parts of urea was added, and they were stirred for 30 minutes to obtain a coating liquid. A 16 µm thick biaxially-stretched polyethylene terephthalate film whose one surface had been subjected to corona discharge treatment was prepared. The coating liquid was applied onto the corona discharge-treated surface of the polyethylene terephthalate film, and was then dried at 110°C for 60 seconds to obtain a resin layer-coated film having a thickness of 18 µm. The thickness of the gas barrier resin layer was 2 µm.

### (Comparative Example 1)

A resin layer-coated film was produced in the same manner as in Example 1 except that addition of urea to the polyurethane resin water dispersion 1 was omitted.

### (Comparative Example 2)

A resin layer-coated film was produced in the same manner as in Example 2 except that addition of urea to the polyurethane resin water dispersion 2 was omitted.

The results of the Examples 1 and 2 and Comparative Examples 1 and 2 are shown in Table 1.

**Table 1**

| | Polymer (A) | | | Organic Compound (B) | | Oxygen permeability (0%RH) [cc/m²·day·atm] | Water Vapor Permeability (100%RH) [g/m²·day·atm] |
|---|---|---|---|---|---|---|---|
| | Type | Amount of Water Dispersion Added (part by weight) | Polymer Content (part by weight) | Type | Content (part by weight) | | |
| Example 1 | Polyurethane Resin Water Dispersion 1 | 10 | 2.5 | Urea | 0.5 | 25.03 | 28.24 |
| Example 2 | Polyurethane Resin Water Dispersion 2 | 10 | 2.5 | Urea | 0.5 | 26.71 | 29.26 |
| Comparative Example 1 | Polyurethane Resin Water Dispersion 1 | 10 | 2.5 | - | - | 44.59 | 30.87 |
| Comparative Example 2 | Polyurethane Resin Water Dispersion 2 | 10 | 2.5 | - | - | 52.97 | 31.95 |

As can be seen from Table 1, the films of Examples 1 and 2 obtained by coating a polyethylene terephthalate film with the resin composition of the present invention containing a polyurethane resin and urea had much higher oxygen barrier properties than the films of Comparative Examples 1 and 2 obtained by coating a polyethylene terephthalate film with only a polyurethane resin not containing urea. In addition, the films of Examples 1 and 2 had higher water vapor barrier properties than the films of Comparative Examples 1 and 2.

### (Example 3)

A resin layer-coated film having a thickness of 14 µm was produced in the same manner as in Example 2 except that the coating liquid prepared in Example 2 was applied onto an alumina-evaporated surface of a 12 µm thick alumina-evaporated transparent film instead of the corona discharge-treated surface of the biaxially-stretched polyethylene terephthalate film. The thickness of the gas barrier resin layer was 2 µm.

### (Example 4)

1.0 part of urea was added to the polyurethane resin water dispersion 2 (10 parts) prepared in Example 2, and they were stirred for 30 minutes to obtain a coating liquid. The thus obtained coating liquid was applied onto an alumina-evaporated surface of a 12 µm thick alumina-evaporated transparent film, and was then dried at 110°C for 60 seconds to obtain a resin layer-coated film having a thickness of 14 µm. The thickness of the gas barrier resin layer was 2 µm.

### (Example 5)

0.1 parts of urea was added to the polyurethane resin water dispersion 2 (10 parts) prepared in Example 2, and they were stirred for 30 minutes to obtain a coating liquid. The thus obtained coating liquid was applied onto an alumina-evaporated surface of a 12 µm thick alumina-evaporated transparent film, and was then dried at 110°C for 60 seconds to obtain a resin layer-coated film having a thickness of 14 µm. The thickness of the gas barrier resin layer was 2 µm.

### (Example 6)

0.2 parts of 1,3-dimethyl urea was added to the polyurethane resin water dispersion 2 (10 parts) prepared in Example 2, and they were stirred for 30 minutes to obtain a coating liquid. The thus obtained coating liquid was applied onto an alumina-evaporated surface of a 12 µm thick alumina-evaporated transparent film, and was then dried at 110°C for 60 seconds to obtain a resin layer-coated film having a thickness of 14 µm. The thickness of the gas barrier resin layer was 2 µm.

### (Comparative Example 3)

The polyurethane resin water dispersion 2 prepared in Example 2 was applied onto an alumina-evaporated surface of a 12 µm thick alumina-evaporated transparent film, and was then dried at 110°C for 60 seconds to obtain a resin layer-coated film having a thickness of 14 µm. The thickness of the gas barrier resin layer was 2 µm.

The results of the Examples 3 to 6 and the Comparative Example 3 are shown in Table 2.

**Table 2**

| | Polymer (A) | | | organic Compound (B) | | Oxygen Permeability (0%RH) [cc/m²·day·atm] | Water Vapor permeability (100%RH) [g/m²·day·atm] |
|---|---|---|---|---|---|---|---|
| | Type | Amount of Water Dispersion Added (part by weight) | Polymer Content (part by weight) | Type | Content (part by weight) | | |
| Example 3 | Polyurethane Resin Water Dispersion 2 | 10 | 2.5 | Urea | 0.5 | 0.14 | 0.83 |
| Example 4 | Polyurethane Resin Water Dispersion 2 | 10 | 2.5 | Urea | 1.0 | 0.36 | 0.88 |
| Example 5 | Polyurethane Resin Water Dispersion 2 | 10 | 2.5 | Urea | 0.1 | 0.64 | 0.99 |
| Example 6 | Polyurethane Resin Water Dispersion 2 | 10 | 2.5 | Dimethyl Urea | 0.2 | 0.59 | 0.90 |
| Comparative Example 3 | Polyurethane Resin Water Dispersion 2 | 10 | 2.5 | - | - | 0.76 | 1.04 |

As can be seen from Table 2, the films of Examples 3 to 6 obtained by coating an alumina-evaporated surface of an alumina-evaporated transparent film with the resin composition of the present invention had higher oxygen barrier properties and water vapor barrier properties than the film of Comparative Example 3.

### (Example 7)

7.5 parts of an aromatic polyurethane-based aqueous adhesive for dry laminate (manufactured by Dainippon Ink and Chemicals, Incorporated under the trade name of "DICDRY WS-325"), 1 part of a curing agent (manufactured by Dainippon Ink and Chemicals, Incorporated under the trade name of "LJ-55"), and 15 parts of purified water were mixed, and the mixture was stirred for 30 minutes to obtain an adhesive for dry laminate 1. To the thus obtained adhesive for dry laminate 1 (10 parts), 0.5 parts of urea was added, and they were stirred for 30 minutes to obtain a coating liquid. A 16 µm thick biaxially-stretched polyethylene terephthalate film whose one surface had been subjected to corona discharge treatment was prepared. The coating liquid was applied onto the corona discharge-treated surface of the polyethylene terephthalate film, and was then dried at 110°C for 30 seconds to obtain a resin layer-coated film having a thickness of 18.4 µm. The thickness of the gas barrier resin layer was 2.4 µm. The thus obtained resin layer-coated film was laminated onto a 25 µm thick unstretched polypropylene film by dry lamination, and was then aged at 40°C for 2 days to obtain a gas barrier laminated film 1.

### (Example 8)

7.5 parts of an aromatic polyurethane-based alcohol soluble adhesive for dry laminate (manufactured by Dainippon Ink and Chemicals, Incorporated under the trade name of "DICDRY AS-106A"), 0.75 parts of a curing agent (manufactured by Dainippon Ink and Chemicals, Incorporated under the trade name of "AK-50"), and 12.4 parts of methanol were mixed, and the mixture was stirred for 30 minutes to obtain an adhesive for dry laminate 2. 0.5 parts of urea was added to the adhesive for dry laminate 2 (10 parts), and they were stirred for 30 minutes to obtain a coating liquid. A 16 µm thick biaxially-stretched polyethylene terephthalate film whose one surface had been subjected to corona discharge treatment was prepared. The coating liquid was applied onto the corona discharge-treated surface of the polyethylene terephthalate film, and was then dried at 110°C for 30 seconds to obtain a resin layer-coated film having a thickness of 18.4 µm. The thickness of the gas barrier resin layer was 2.4 µm. The thus obtained resin layer-coated film was laminated onto a 25 µm thick unstretched polypropylene film by dry lamination, and was then aged at 40°C for 2 days to obtain a gas barrier laminated film 2.

### (Comparative Example 4)

A laminated film 3 was produced in the same manner as in Example 7 except that addition of urea was omitted.

### (Comparative Example 5)

A laminated film 4 was produced in the same manner as in Example 8 except that addition of urea was omitted.

The results of the Examples 7 and 8 and Comparative Examples 4 and 5 are shown in Table 3.

**Table 3**

| | Polymer (A) | | | Organic Compound (B) | | Oxygen Permeability 0%RH) [cc/m²·day·atm] | Water Vapor Permeability (100%RH) [g/m²·day·atm] |
|---|---|---|---|---|---|---|---|
| | Type | Amount of Water Dispersion Added (part by weight) | Polymer Content (part by weight) | Type | Content (part by weight) | | |
| Example 7 | Adhesive for Dry Laminate 1 | 10 | 1.7 | Urea | 0.5 | 90.37 | 8.71 |
| Example 8 | Adhesive for Dry Laminate 2 | 10 | 1.7 | Urea | 0.5 | 90.82 | 8.70 |
| Comparative Example 4 | Adhesive for Dry Laminate 1 | 10 | 2.0 | - | - | 98.04 | 8.95 |
| Comparative Example 5 | Adhesive for Dry Laminate 2 | 10 | 2.0 | - | - | 98.82 | 8.91 |

As can be seen from Table 3, the laminated films of Examples 7 and 8 obtained by dry lamination using the resin composition of the present invention containing a urethane-based adhesive for dry laminate and urea exhibited higher gas barrier properties than the conventional laminated films of Comparative Examples 4 and 5. From the result, it has been found that the resin composition of the present invention is very useful for forming a laminated film composed of a gas barrier film and a sealant film.

### (Example 9)

5.0 parts of an epoxy resin with glycidyl amine moieties derived from m-xylylenediamine ("MT-9312 (base resin)" manufactured by MITSUBISHI GAS CHEMICAL COMPANY, Incorporated) and 15.9 parts of a methanol solution of an epoxy resin curing agent derived from m-xylylenediamine and methyl acrylate (solid concentration: 65%, "MT-9312 (curing agent)"manufactured by MITSUBISHI GAS CHEMICAL COMPANY, Incorporated) were added to a mixed solvent of 41.0 parts of methanol and 5.0 parts of ethyl acetate, and they were stirred for 30 minutes to obtain an epoxy-based resin solution 1 having a solid content of 25 wt%. To the epoxy-based resin solution 1 (10 parts), 0.2 parts of urea was added, and they were stirred for 30 minutes to obtain a coating liquid. The thus obtained coating liquid was applied onto an alumina-evaporated surface of a 12 µm thick alumina-evaporated transparent film, and was then dried at 110°C for 60 seconds to obtain a resin layer-coated film having a thickness of 14 µm. The thickness of the gas barrier resin layer was 2 µm.

### (Comparative Example 6)

A resin layer-coated film was produced in the same manner as in Example 9 except that addition of urea to the epoxy-based resin solution 1 was omitted.

The results of Example 9 and Comparative Example 6 are shown in Table 4.

**Table 4**

| | Polymer (A) | | | Organic Compound (B) | | Oxygen Permeability (0%RH) [cc/m²·day·atm] | Water Vapor permeability (100%RH) [g/m²·day·atm] |
|---|---|---|---|---|---|---|---|
| | Type | Amount of Water Dispersion Added (part by weight) | Polymer Content (part by weight) | Type | Content (part by weight) | | |
| Example 9 | Epoxy-Based Resin Solution 1 | 10 | 2.5 | Urea | 0.2 | 0.49 | 0.91 |
| Comparative Example 6 | Epoxy-Based Resin Solution 1 | 10 | 2.5 | - | - | 0.64 | 1.01 |

As can be seen from Table 4, the film of Example 9 obtained by coating an alumina-evaporated surface of an alumina-evaporated film with the resin composition of the present invention containing an epoxy-based resin and urea had higher oxygen and water vapor barrier properties than the film of Comparative Example 6 obtained by coating an alumina-evaporated surface of an alumina-evaporated film with only an epoxy-based resin.

### INDUSTRIAL APPLICABILITY

The present invention can be applied to various gas barrier films for packaging such as gas barrier resin films for food packaging. However, applications of the present invention are not limited to such gas barrier films.

## Claims

1. A gas barrier resin composition comprising:
a polymer (A) whose repeating unit contains a functional group with active hydrogen and/or a polar functional group with hetero atom; and
an organic compound (B) containing, in its molecule, a functional group with active hydrogen and/or a polar functional group with hetero atom.

2. The gas barrier resin composition according to claim 1, wherein the functional group with active hydrogen of the polymer (A) is at least one kind selected from the group consisting of a hydroxyl group, an amino group, a carboxyl group, and an amide group.

3. The gas barrier resin composition according to claim 1, wherein the polar functional group with hetero atom of the polymer (A) is at least one kind selected from the group consisting of a carbonyl group, a cyano group, an amide group, and a thiocarbonyl group.

4. The gas barrier resin composition according to claim 1, wherein the polymer (A) contains at least one selected from the group consisting of a urethane segment and a urea segment.

5. The gas barrier resin composition according to claim 1, wherein the polymer (A) is polyurethane.

6. The gas barrier resin composition according to claim 1, wherein the organic compound (B) contains at least one selected from the group consisting of a primary amino group, a secondary amino group, and a carbonyl group.

7. The gas barrier resin composition according to claim 1, wherein the organic compound (B) is at least one urea-based compound selected from the group consisting of urea, dimethyl urea, and thiourea.

8. A gas barrier film comprising the gas barrier resin composition according to any one of claims 1 to 7.

9. The gas barrier film according to claim 8, wherein a resin film comprising the gas barrier resin composition is laminated onto a base film.

10. The gas barrier film according to claim 9, further comprising at least one layer laminated on the base film, the layer being selected from the group consisting of a metal layer, a metal oxide layer, and a metal nitride layer.
